# EUROPÄISCHE PATENTSCHRIFT

(11) **EP 1 928 254 B1**
(45) Veröffentlichungstag und Bekanntmachung des Hinweises auf die Patenterteilung: **02.05.2012**
(21) Anmeldenummer: 06776831.7
(22) Anmeldetag: 05.08.2006
(51) Int. Cl.: A22C 25/18

(54) **VORRICHTUNG UND VERFAHREN ZUM OBERFLÄCHENTRIMMEN VON FLEISCH**
DEVICE FOR, AND METHOD OF, TRIMMING THE SURFACE OF MEAT
DISPOSITIF ET PROCÉDÉ DE PAREMENT DE LA SURFACE DE LA VIANDE

(30) Priorität: 28.09.2005 DE 102005047752
(43) Veröffentlichungstag der Anmeldung: 11.06.2008
(73) Patentinhaber: Nordischer Maschinenbau Rud. Baader GmbH + Co. KG, 23560 Lübeck (DE)
(72) Erfinder: RUSKO, Torsten, 23923 Herrnburg (DE); NEUMANN, Ralf, 23628 Klempau (DE)
(74) Vertreter: Stork Bamberger
(86) Internationale Anmeldenummer: PCT/EP2006/008020
(87) Internationale Veröffentlichungsnummer: WO 2007/036261

(56) Entgegenhaltungen:
- WO-A-01/67873
- WO-A-03/037090
- WO-A-2004/106020
- DD-A1- 257 009
- DE-A1- 19 834 524
- GB-A- 2 364 894
- US-A- 4 748 724
- US-A1- 2005 032 471

## Beschreibung

### Beschreibung

Die Erfindung betrifft eine Vorrichtung zum Oberflächentrimmen von Fleisch, insbesondere von Fischfilets, umfassend ein Transportelement zum kontinuierlichen Fördern der zu bearbeitenden Produkte in Transportrichtung T in den Bereich eines Messerkopfes, ein Element zur Lageerkennung der Produkte, einen Messerkopf zum Trimmen der Produkte sowie eine Regel- und/oder Steuerungsvorrichtung zur Bewegung des Messerkopfes in Abhängigkeit der durch das Element zur Lageerkennung ermittelten Daten und Informationen.

Weiterhin befasst sich die Erfindung mit einem Verfahren zum Oberflächentrimmen von Fleisch, insbesondere von Fischfilets, umfassend die Schritte: Erkennen der Lage der zu bearbeitenden Produkte mit einem Element zur Lageerkennung, Ermitteln geometrischer Daten und/oder Bilddaten jedes Produktes, Zuführen der Produkte in den Bereich eines Messerkopfes mit einem Transportelement, Trimmen der Produkte durch Schneiden eines Fleischstreifens von den Produkten auf der Basis der zuvor ermittelten Daten mit dem Messerkopf, und Abführen der Produkte aus dem Bereich des Messerkopfes mit dem Transportelement.

In der fleisch- und fischverarbeitenden Industrie werden die Produkte üblicherweise automatisiert verarbeitet bzw. bearbeitet. Am Beispiel der Fischverarbeitung bedeutet dies, dass die Fischfilets einer Oberflächentrimmung unterzogen werden. Mittels der Oberflächentrimmung werden auf der Oberfläche des Fischfilets unerwünschte und/oder wertmindernde Bestandteile entfernt. Dabei handelt es sich z.B. um das Beseitigen von weißer Bauchhaut, Flossenansätzen, Filetierfehlern oder sonstigen Fehlerstellen. Produkte weisen jedoch unterschiedliche Größen und/oder Konturen und/oder Topographien auf. Auch können die Produkte auf dem Transportelement unterschiedliche Positionen und Lagen einnehmen. Das bedeutet, dass jedes Produkt individuell bearbeitet werden muss, um ein zufriedenstellendes Ergebnis zu erzielen.

Bisher wird dieses Ziel häufig durch manuelles Trimmen erreicht. Nach dem automatischen Filetieren in einer entsprechenden Vorrichtung bearbeiten eine oder mehrere Bedienpersonen die Fischfilets mit sogenannten Handtrimmgeräten. Dies können einfache Handmesser sein, die optional auch über einen oszillierenden oder rotierenden Antrieb verfügen. Dies hat jedoch den Nachteil, dass das Oberflächentrimmen wegen des Personalaufwands sehr teuer und damit unattraktiv ist. Des weiteren ist die Qualität des Trimmens und damit auch die Produktausbeute von der Qualifikation und Erfahrung der jeweiligen Bedienperson abhängig.

Zur Vermeidung der genannten Nachteile wurde versucht, das Oberflächentrimmen zu automatisieren. Aus der WO 03/037090 A1 ist beispielsweise eine Vorrichtung zum automatischen Trimmen von Fischfilets bekannt. Die Vorrichtung weist ein Werkzeug mit einem oszillierenden Messerkopf auf. Der Messerkopf ist über eine Steuerung ansteuerbar. Zur Erkennung der zu bearbeitenden Oberflächenabschnitte ist eine Kamera vorgesehen. Durch die Steuerung wird der Messerkopf dann motorisch an die entsprechenden Stellen bewegt. Um den Messerkopf mit dem Produkt in Eingriff zu bringen, weist die bekannte Vorrichtung eine Anhebeplatte auf, mittels der die zu bearbeitenden Bereiche des Produkts auf eine plane Ebene in Richtung des Messerkopfes gehoben und getrimmt werden. In dieser Ebene führt das oszillierende Messer dann einen horizontalen Schnitt aus. Diese Vorrichtung mit dem dazugehörigen Verfahren weist jedoch den Nachteil auf, dass das Produkt mindestens teilweise den Kontakt zu dem Transportband verliert, so dass gerade während des Schneidvorgangs die Gefahr des Rutschens besteht. Des weiteren ist die Anhebeplatte in der Form unflexibel ausgebildet, wodurch es an einer Anpassung an die unterschiedlichen Produkte fehlt. Besonders nachteilig ist jedoch die Tatsache, dass ein kontrollierter Flächenabtrag nicht möglich ist, da die Topographie der zu bearbeitenden Oberfläche sehr unterschiedlich ist.

Das letztgenannte Problem besteht auch, wenn die zuvor beschriebenen Handwerkzeuge in Vorrichtungen zur Filetierung nachgerüstet werden, da es an einer gesteuerten Winkelbewegung fehlt. Mit anderen Worten kann das Messer nicht an die Topographie des Produktes angepasst werden. Die Messer müssen auch während des Gebrauchs häufig nachgeschliffen werden, was zu Stillstandszeiten der gesamten Vorrichtung führt. Weiterhin kann die offenliegende Verzahnung leicht verschmutzen und so zu Störungen bzw. sogar Ausfällen führen. Ein anderes Problem stellt die notwendige Schmierung des Antriebs dar, die in unmittelbarer Nähe des Produktes erfolgt und die Qualität des Produktes negativ beeinflusst.

Es ist daher Aufgabe der vorliegenden Erfindung, eine kompakte Vorrichtung zum produktspezifischen und automatischen Oberflächentrimmen zu schaffen. Des weiteren besteht die Aufgabe darin, ein entsprechendes Verfahren vorzuschlagen. Eine weitere Aufgabe besteht darin, eine Vorrichtung zum Verarbeiten von Fleisch mit den genannten Eigenschaften des Oberflächentrimmens zu schaffen. Eine vorrichtung bzw. ein Verfahren gemäß oberbegriff der Ansprüche 1 und 26 ist aus GB-A-2364 894 bekannt.

Diese Aufgabe wird durch eine Vorrichtung gemäß Anspruch 1 gelöst. Vorzugsweise ist der Messerkopf dazu um und/oder entlang mindestens drei Achsen bewegbar ausgebildet. Diese Ausführung ermöglicht auf besonders einfache und kompakte Weise die freie Bewegbarkeit des Messerkopfes.

In einer bevorzugten Weiterbildung der erfindungsgemäßen Vorrichtung ist der Messerkopf um und/oder entlang vier Achsen bewegbar ausgebildet. Damit können weitere Schneidparameter eingestellt werden, was zu noch besseren und individuelleren Schneidergebnissen führt.

Das Kreismesser ist mit einer Schnittgegenlage, versehen wobei die Schnittgegenlage mindestens in einem Bereich, der in Transportrichtung T der zu bearbeitenden Produkte vor dem Kreismesser liegt, als Tastelement ausgebildet ist. Neben einer verbesserten Schnittführung ist die Schnittgegenlage dadurch gleichzeitig als Steuerelement verwendbar, da das Produkt durch die erfindungsgemäße Ausbildung zunächst an die Schnittgegenlage stößt und durch diese der Messerkopf steuerbar und ggf. zur Erkennung der Kontur der Produkte auf diesen entlang bewegbar ist.

Eine bevorzugte Ausführungsform ist dadurch gekennzeichnet, dass die Schnittgegenlage gegenüber dem Kreismesser geneigt angeordnet ist, derart, dass sich die durch das Kreismesser aufgespannte Ebene E₁ und die durch die Unterseite der Schnittgegenlage aufgespannte Ebene E₂ mindestens in einem Punkt S schneiden. Damit wird sichergestellt, dass die vom Produkt abzutrennenden Teile auch tatsächlich vollständig vom Produkt gelöst werden, da die Produkte zwangsläufig den Schnittpunkt durchlaufen müssen.

In einer vorteilhaften Weiterbildung der Erfindung ist dem Messerkopf eine Einrichtung zur Entfernung der vom Produkt getrennten Teile zugeordnet. Damit ist der Bereich des Messerkopfes stets frei von störenden Teilen, was zu einer verbesserten Schnittqualität und einem störungsfreien Betrieb führt.

Die Aufgabe wird auch durch ein Verfahren gemäß Anspruch 26 gelöst.

Die Aufgabe wird weiterhin durch eine Vorrichtung zum Verarbeiten von Fleisch mit den oben genannten Merkmalen dadurch gelöst, dass die Vorrichtung zum Oberflächentrimmen nach einem der Ansprüche 1 bis 25 ausgebildet ist. Die sich daraus ergebenden Vorteile wurden im Zusammenhang mit der Vorrichtung zum Oberflächentrimmen genannt, so das auf diese Abschnitte verwiesen wird.

Weitere vorteilhafte oder bevorzugte Merkmale und Ausbildungen sowie Verfahrensschritte ergeben sich aus den Unteransprüchen und der Beschreibung. Eine besonders bevorzugte Ausführungsform sowie das Verfahren werden anhand der beigefügten Zeichnung näher erläutert. In der Zeichnung zeigt:
- Fig. 1: eine schematische Darstellung der Vorrichtung zum Oberflächentrimmen von Fleisch in einer Seitenansicht,
- Fig. 2: eine Ansicht der Vorrichtung gemäß Figur 1 entgegen der Transportrichtung T, und
- Fig. 3: eine Vorrichtung zum Verarbeiten von Fleisch mit einer Vorrichtung zum Oberflächentrimmen gemäß Figur 1.

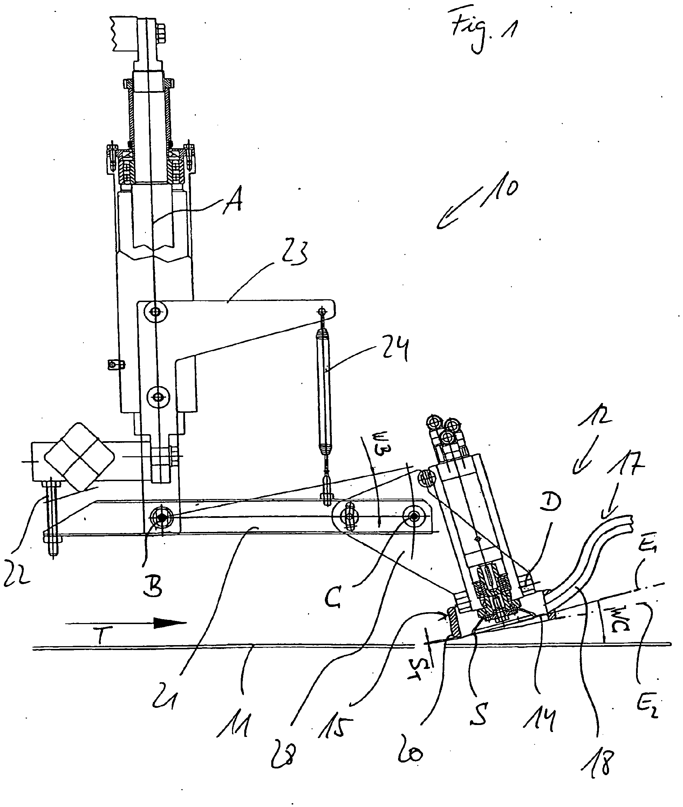

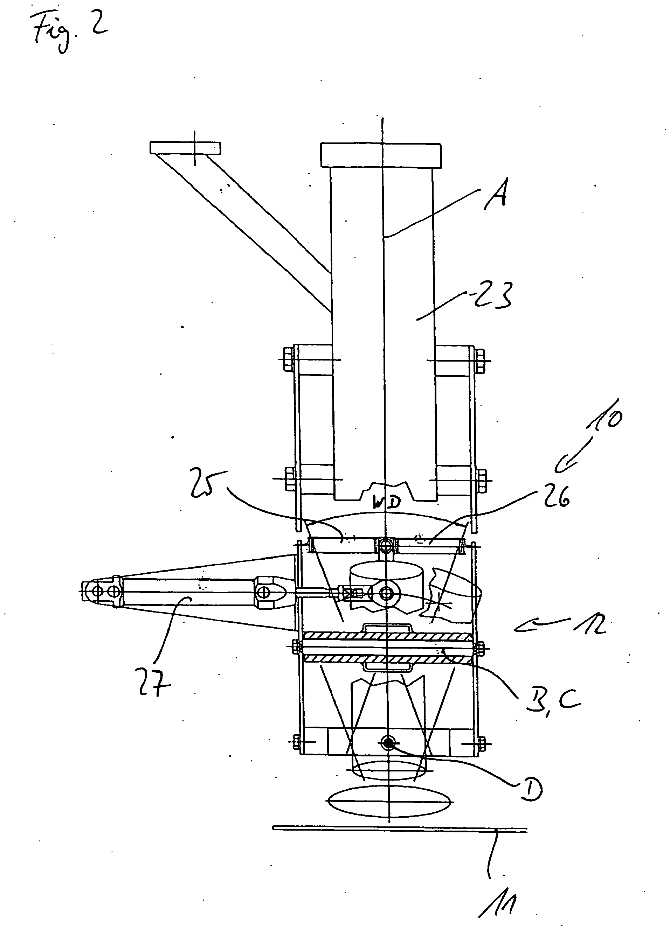

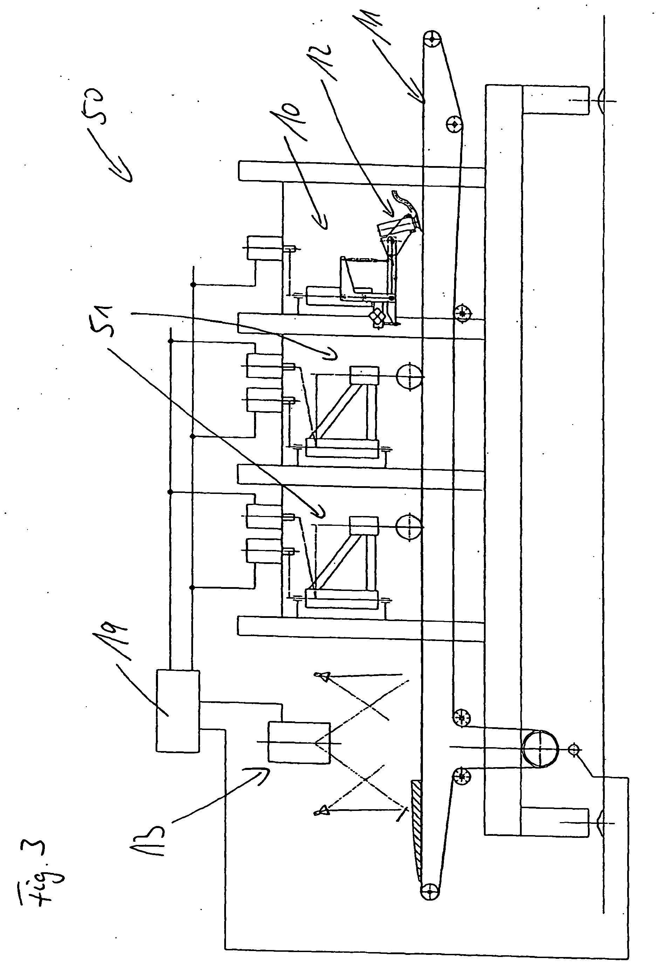

Die in den Figuren 1 und 2 dargestellte Vorrichtung ist eine ausgewählte Ausführungsform zum Oberflächentrimmen von Fischfilets, wobei die Vorrichtung als Einzelvorrichtung oder als Bestandteil einer Vorrichtung zur Verarbeitung von Fisch gemäß Figur 3 ausgebildet sein kann.

Eine beispielhafte Vorrichtung 10 zum Oberflächentrimmen ist der Figur 1 zu entnehmen. Die Vorrichtung 10 weist ein Transportelement 11 auf, das vorzugsweise als endlos umlaufendes Transportband ausgebildet ist und zum kontinuierlichen Fördern der zu bearbeitenden Produkte in den Bereich eines Messerkopfes 12 dient. Selbstverständlich ist das Transportelement auch zum Fördern der bearbeiteten Produkt aus dem Bereich des Messerkopfes 12 ausgebildet und geeignet. Optional kann dem Transportelement 11 eine (nicht explizit dargestellte) Vorrichtung zum Erzeugen eines Unterdrucks zugeordnet sein. Mittels des Unterdrucks können die Produkte mindestens partiell und mindestens temporär, vorzugsweise während des eigentlichen Trimmvorgangs, auf dem Transportelement 11 fixiert werden. Andere übliche Möglichkeiten zur Fixierung der Produkte auf dem Transportelement 11 zur Vermeidung einer Relativbewegung zwischen Produkt und Transportelement 11, also zum Ausschließen von Verrutschen der Produkte, sind ausdrücklich ebenso möglich.

Das Fördern der Produkte erfolgt üblicherweise in Transportrichtung gemäß Pfeil T. Des weiteren umfasst die Vorrichtung 10 ein in Figur 3 dargestelltes Element 13 zur Lageerkennung, das zur Aufnahme von Daten der auf dem Transportelement 11 unterhalb des Elementes 13 entlang geführten Produkte ausgebildet ist. Das Element 13 ist bevorzugt eine Kamera. Das Element 13 ist optional zur Aufnahme von Informationen, die zu Daten zweierlei Qualität, vorzugsweise geometrischen Daten und/oder Bilddaten, verarbeitbar sind, ausgebildet. Schließlich ist eine (lediglich in Figur 3 dargestellte) Steuerung 19 Bestandteil der Vorrichtung 10. Mittels der Steuerung 19 ist der Messerkopf 12 auf der Basis der ermittelten Daten und Informationen steuerbar.

Der Messerkopf 12 dient zum Trimmen der Oberfläche der der Vorrichtung 10 zugeführten Produkte. Mit dem Trimmen ist das Schneiden von an der Oberfläche befindlichen Streifen des Produktes bezeichnet, die aus Gründen der Qualität und/oder der Optik vom eigentlichen Produkt entfernt werden sollen. Der Messerkopf 12 ist zur automatischen Ausführung freier Trimmschnitte entlang der Oberflächenkontur der Produkte ausgebildet. Der Messerkopf 12 weist zu diesem Zweck ein Kreismesser 14 auf. Das Kreismesser 14 kann in verschiedenen üblichen Ausführungen ausgebildet sein. Bevorzugt ist jedoch eine topfartige Ausbildung. Diesem auch als Topfmesser bezeichneten Kreismesser 14 ist eine Schnittgegenlage 15 zugeordnet. Die Schnittgegenlage 15 ist ringförmig ausgebildet, wobei auch andere Formen der Schnittgegenlage 15 einsetzbar sind. In einem in Transportvorrichtung T vor dem Kreismesser 14 liegenden Bereich ist die Schnittgegenlage 15 zusätzlich als Tastelement 20 ausgebildet. In der gezeigten Ausführungsform ist das Tastelement 20 integraler Bestandteil der Schnittgegenlage 15 und dient gleichzeitig zur Steuerung einer Vertikalbewegung des Messerkopfes 12 sowie zum "Scannen" der Kontur der zu bearbeitenden Produkte, wie weiter unten beschrieben wird. Die Schnittgegenlage 15 und das Kreismesser 14 sind vorzugsweise zueinander geneigt ausgebildet. Das bedeutet, dass sich die durch das Kreismesser 14 aufgespannte Ebene E₁ und die durch die Unterseite der Schnittgegenlage 15 aufgespannte Ebene E₂ in mindestens einem Schnittpunkt S kreuzen. Diese Neigung ist des weiteren einstellbar, und zwar von einer Neigung gleich Null bis zu einer maximalen Neigung, wobei sich die Schnittdicke bzw. Schnitttiefe S_{T} mit zunehmender Neigung vergrößert. Wie bereits erwähnt, ist die Schnittgegenlage 15 derart formgestaltet, dass sie zum Erkennen der Kontur der Produkte geeignet ist. Dies kann z.B. durch eine stufige, wellenförmige oder anderweitig ausgeprägte Ausbildung erreicht werden. Des weiteren weist die Schnittgegenlage 15 entgegen der Transportrichtung T gerichtet eine rampenartige bzw. angeschrägte oder abgerundete Form auf, derart, dass die einlaufenden Produkte zuverlässig unter der Schnittgegenlage 15 bzw. dem Messerkopf 12 hindurch laufen. Anders ausgedrückt stellt die Formgebung sicher, dass der Messerkopf 12 durch die einlaufenden Produkte angehoben wird.

Dem Messerkopf 12 ist ein Antrieb 16 zugeordnet. Der Antrieb 16 dient zum rotierenden Antreiben des Kreismessers 14 und kann z.B. als Druckluftmotor ausgebildet sein. Aber auch andere übliche Antriebsmittel, wie z.B. elektrische oder hydraulische Antriebe, können eingesetzt werden. Die durch das Trimmen anfallenden Reste, wie z.B. Fleischstreifen, Hautstreifen etc., sind durch geeignete Mittel aus dem Trimmbereich abführbar. Hierzu ist dem Messerkopf 12 und genauer der Schnittgegenlage 15 beispielsweise eine Einrichtung 17 zur Entfernung der vom Produkt getrennten Teile zugeordnet. Diese Einrichtung 17 kann z.B. eine Absaugeinrichtung sein. Wesentliche Bestandteile einer solchen Absaugeinrichtung sind u.a. ein Schlauch 18, der bevorzugt durch die Schnittgegenlage 15 direkt in den Wirkbereich des Kreismessers 14 eintaucht bzw. genauer oberhalb des Kreismessers 14 an den Arbeitsraum angeschlossen ist, sowie eine entsprechende (nicht dargestellte) Pumpe, mittels der die abgetrennten Teile durch den Schlauch 18 in ein Auffangbehältnis oder dergleichen abführbar sind.

Der Messerkopf 12 ist zur Ausführung der einzelnen Trimmschnitte um und/oder entlang mindestens drei, vorzugsweise jedoch um und/oder entlang vier Achsen bewegbar ausgebildet. In der gezeigten Ausführungsform ist der Messerkopf 12 zum einen über ein Flanschelement 28 an einem Hebelelement 21 angeordnet, das schwenkbar um eine horizontal verlaufende Achse B auf und ab bewegbar, nämlich in vertikaler Richtung senkrecht zum Transportelement 11 (Winkelbewegung WB), ist. Das Flanschelement 28 selbst ist bewegbar bzw. schwenkbar am Hebelelement 21 angeordnet. Ein optional vorgesehener Anschlag 22 dient dazu, dass das Hebelelement 21 um die Achse B nicht über eine horizontale Lage hinaus nach unten schwenken kann. Das Hebelelement 21 ist an einer Schwinge 23 angeordnet, die ihrerseits um eine vertikale Achse A drehbar ist. Dadurch ist eine Bewegung quer zur Transportrichtung T parallel über dem Transportelement 11 realisierbar. Zusätzlich ist das Hebelelement 21 über ein Ausgleichselement 24 mit der Schwinge 23 verbunden. Das Ausgleichselement 24 kann ein Pneumatik- oder Hydraulikzylinder, ein Federelement oder ein Gegengewicht sein. Andere Elenriente, die ebenso wie die vorgenannten einstellbar und in der Kraftwirkung einstellbar sind, können ebenfalls eingesetzt werden. Mittels des Ausgleichselementes 24 ist der Schnittdruck, beispielsweise an unterschiedliche Produktkonsistenzen, anzupassen.

Des weiteren ist der Messerkopf 12 quer zur Transportrichtung T um eine Achse D kippbar ausgebildet. Um die Achse D kann der Messerkopf 12 dadurch eine Winkelbewegung WD ausführen, wobei über die Winkelbewegung WD der seitliche Schnittdruck einstellbar ist. Hierzu sind Federelemente 25, 26 vorgesehen, die auch durch gleichwirkende Elemente ersetzt werden können. Optional kann dem Messerkopf 12 zur Ausführung der Kippbewegung ein Pneumatikzylinder 27 oder dergleichen zugeordnet sein, wodurch ein gesteuertes Bewegen insbesondere in die entsprechenden Endlagen erreicht werden kann. Eine weitere Bewegungsmöglichkeit des Messerkopfes 12 existiert um die Achse C. Um die horizontal verlaufende Achse C ist eine Schwenkbewegung des Messerkopfes 12 relativ zum Hebelement 21 gewährleistet, wodurch der Anstellwinkel WC des Kreismessers 14 an das Produkt und damit die Schnittbreite einstellbar ist.

Der Messerkopf 12 ist zur Nachführung individueller Produktkonturen ausgebildet. Das bedeutet, dass die Produkte unabhängig von der individuellen Geometrie und/oder Kontur sowie unabhängig von der Größe jeweils optimal auf ihrer Oberfläche trimmbar sind. Dabei kann der Messerkopf 12 wahlweise produktgesteuert, insbesondere mit Hilfe des Tastelementes 20, und/oder aktiv durch geeignete Hilfsmittel, wie z.B. Druckzylinder, Federelemente, Ausgleichsgewichte aber auch durch das Eigengewicht gesteuert sein. Insbesondere die Höhenbewegung um die Achse B und die Kippbewegung D (Winkelbewegung WD) können mindestens teilweise bzw. abschnittsweise durch das Produkt unterstützt sein. In der beschriebenen Ausführung sind die Bewegungen um die Achsen A und B als Schwenkbewegungen auf einer bogenförmigen Bahn beschrieben. Diese Bewegungen können alternativ auch in linearer Richtung beispielsweise durch Linearschlitten oder dergleichen realisiert sein.

Die Vorrichtung 10 kann als Einzelmodul ausgebildet und eingesetzt werden. Alternativ kann die Vorrichtung 10 jedoch auch integraler Bestandteil einer übergeordneten Vorrichtung 50 beispielsweise zum Verarbeiten von Fleisch sein. Eine solche Vorrichtung 50 ist der Figur 3 zu entnehmen, wobei die Vorrichtung 50 in Transportrichtung T der zu verarbeitenden Produkte ein Element 13 zur Lageerkennung, mindestens ein Trennmittel 51 sowie die Vorrichtung 10 aufweist. Die Produkte sind mittels des Transportmittels 11 kontinuierlich oder schrittweise von Station zu Station transportierbar. Sämtliche Komponenten sind an die gemeinsame Regel- und/oder Steuerungsvorrichtung 19, die sowohl zur Regelung/Steuerung des oder jedes Trennmittels 51 als auch zur Steuerung/Regelung der Vorrichtung 10 ausgebildet ist, angeschlossen. Das Element 13 zur Lageerkennung, dient zur Aufnahme von Informationen und Daten, die für die Trimm- und/oder Trennschnitte sowie für das Oberflächentrimmen verwendbar sind.

Im folgenden wird speziell das Verfahren zum Oberflächentrimmen von Fischfilets anhand der Figuren 1 bis 3 näher erläutert:
Die Fischfilets werden einbahnig oder mehrbahnig mittels des Transportelementes 11 in die Vorrichtung 10 eingeführt. Zunächst läuft das oder jedes Fischfilet unterhalb des Elementes 13 zur Lageerkennung entlang. Mit dem Element 13 zur Lageerkennung werden Informationen über die Lage des oder jedes Filets auf dem Transportelement 11 und die Lage der zu trimmenden Bereiche im Filet aufgenommen. Die Aufnahme erfolgt vorzugsweise optisch mit geeigneten Kameraelementen oder dergleichen. Die ermittelten Informationen und Daten (geometrische Daten und/oder Bilddaten) werden ausgewertet und an die nachfolgenden Stationen (Trennmittel 51 und Vorrichtung 10) weitergeleitet. Alternativ oder kumulativ können zur Steuerung der nachfolgenden Stationen auch statistische Werte herangezogen werden.

Nach dem Schneiden und Trimmen durch die Trennmittel 51 werden die Filets unter die Vorrichtung 10 transportiert. Erreicht das Filet den Messerkopf 12, wird dieser entsprechend der ermittelten bzw. errechneten Parameter mit der Schwinge 23 zum Filet geführt. Über die Schnittgegenlage 15 bzw. das Tastelement 20 wird der Messerkopf 12 durch das Filet angehoben. Während die Schnittgegenlage 15 auf dem Filet entlang gleitet, dabei der Kontur des Filets nachfolgend, wird entsprechend dem Spalt S (siehe Figur 1) und dem Winkel WC von der Oberfläche des Filets ein Streifen abgeschnitten. Durch die gesteuerte Querbewegung des Kreismessers 14 um die Achse A kann die Einflusszone des Kreismessers 14 auf dem Filet verändert werden. Über die Winkelbewegung WD passt sich der Messerkopf 12 an die unterschiedlichen Oberflächenkonturen/ -strukturen an, um diese optimal abfahren bzw. nachführen zu können. Die abgeschnittenen Streifen und Teile werden über den Schlauch 18 abgesaugt und aus der Vorrichtung 10 geführt. Während des Oberflächentrimmens werden die Filets durch Unterdruck auf dem Transportelement 11 fixiert. Nach dem Oberflächentrimmen werden die Filets mittels des Transportelementes 11 aus der Vorrichtung 10 abtransportiert.

Die Querbewegung um die Achse A wird über die Fileterkennung gesteuert. Die Höhenbewegung um die Achse B steuert das Filet über die Schnittgegenlage 15 bzw. das Tastelement 20. Mit der Einstellung des Ausgleichselementes 24, wird der Schnittdruck auf die Filetkonsistenz angepasst. Der Anstellwinkel WC des Messerkopfes 12, der die Schnittbreite des Kreismessers 14 beeinflusst, wird über das Flanschelement 28 eingestellt und fixiert. Die Einstellung kann vor der jeweiligen Bearbeitung und on-line erfolgen. Die Winkelbewegung WD kann sowohl vom Filet als auch aktiv gesteuert durchgeführt werden. Dabei kann es u.U. auch sinnvoll sein, die seitliche Neigung WD des Messerkopfes 12 in einigen Bereichen des Filets aktiv zu steuern und in anderen Bereichen die Bewegung über die Schnittgegenlage 15 bzw. das Tastelement 20 vom Filet abzutasten. Über die Federelemente 25, 26 kann optional der seitlicher Schnittdruck über die Winkelbewegung WD eingestellt werden. Zusätzlich kann über den Pneumatikzylinder 27 ein gesteuertes Bewegen der Messerkopfes 12 in die Endlagen um die Achse D erfolgen. Des weiteren kann auch die Schnitttiefe bzw. die Schnittdicke S_{T} eingestellt werden. Hierzu ist die Neigung zwischen dem Kreismesser 14 und der Schnittgegenlage 15 zu verändern. Je größer die Neigung ist, desto größer wird der Spalt S_{T}, der die Schnittdicke bestimmt.

Das Verfahren ist jedoch selbstverständlich auch zum Oberflächentrimmen anderer Fleischprodukte in entsprechender Weise einsetzbar.

## Patentansprüche

1. Vorrichtung zum Oberflächentrimmen von Fleisch, insbesondere von Fischfilets, umfassend ein Transportelement (11) zum kontinuierlichen Fördern der zu bearbeitenden Produkte in Transportrichtung T in den Bereich eines Messerkopfes (12), ein Element (13) zur Lageerkennung der Produkte, einen Messerkopf (12) zum Trimmen der Produkte sowie eine Steuerung zur Bewegung des Messerkopfes (12) in Abhängigkeit der durch das Element (13) zur Lageerkennung ermittelten Daten und Informationen, **dadurch gekennzeichnet, dass** der Messerkopf (12) ein Kreismesser (14) und eine Schnittgegenlage (15) umfasst und zur automatischen Ausführung freier, der individuellen Kontur der Produkte folgender Trimmschnitte ausgebildet ist.

2. Vorrichtung nach Anspruch 1, **dadurch gekennzeichnet, dass** der Messerkopf (12) um und/oder entlang mindestens drei Achsen (A, B, D) bewegbar ausgebildet ist.

3. Vorrichtung nach Anspruch 1 oder 2, **dadurch gekennzeichnet, dass** der Messerkopf (12) um und/oder entlang vier Achsen (A, B, C, D) bewegbar ausgebildet ist.

4. Vorrichtung nach einem der Ansprüche 1 bis 3, **dadurch gekennzeichnet, dass** der Messerkopf (12) wahlweise produktgesteuert und/oder aktiv gesteuert ist.

5. Vorrichtung nach einem der Ansprüche 1 bis 4, **dadurch gekennzeichnet, dass** der Messerkopf (12) über ein Flanschelement (28) an einem Hebelelement (21) angeordnet ist, das schwenkbar um eine horizontal verlaufende Achse B auf und ab bewegbar.

6. Vorrichtung nach Anspruch 5, **dadurch gekennzeichnet, dass** das Hebelelement (21) an einer Schwinge (23) angeordnet ist, die ihrerseits um eine vertikale Achse A drehbar ist.

7. Vorrichtung nach Anspruch 6, **dadurch gekennzeichnet, dass** das Hebelelement (21) zusätzlich über ein Ausgleichselement (24) mit der Schwinge (23) in Verbindung steht.

8. Vorrichtung nach Anspruch 7, **dadurch gekennzeichnet, dass** das Ausgleichselement (24) wahlweise ein Hydraulik- oder Pneumatikzylinder, eine Feder, ein Gegengewicht oder dergleichen ist.

9. Vorrichtung nach einem der Ansprüche 1 bis 8, **dadurch gekennzeichnet, dass** der Messerkopf (12) quer zur Transportrichtung T um eine Achse D kippbar ausgebildet ist.

10. Vorrichtung nach einem der Ansprüche 5 bis 9, **dadurch gekennzeichnet, dass** der Messerkopf (12) relativ zum Hebelelement (21) um eine horizontal verlaufende Achse C schwenkbar ist.

11. Vorrichtung nach Anspruch 9 oder 10, **dadurch gekennzeichnet, dass** die Schwenkbewegung um die Achse B und die Kippbewegung um die Achse D wahlweise produktgesteuert und/oder antriebsgesteuert ausführbar sind.

12. Vorrichtung nach einem der Ansprüche 9 bis 11, **dadurch gekennzeichnet, dass** der Schnittdruck um die Achse D mittels Federelementen (25, 26) oder dergleichen einstellbar ist.

13. Vorrichtung nach einem der Ansprüche 9 bis 12, **dadurch gekennzeichnet, dass** dem Messerkopf (12) zur Ausführung der Kippbewegung um die Achse D ein Pneumatikzylinder (27) oder dergleichen zugeordnet ist.

14. Vorrichtung nach einem der Ansprüche 1 bis 13, **dadurch gekennzeichnet, dass** die Schnittgegenlage (15) ringförmig ausgebildet ist.

15. Vorrichtung nach einem der Ansprüche 1 bis 14, **dadurch gekennzeichnet, dass** die Schnittgegenlage (15) mindestens in einem Bereich, der in Transportrichtung T der zu bearbeitenden Produkte vor dem Kreismesser (14) liegt, als Tastelement (20) zur Erkennung der Kontur der Produkte ausgebildet ist.

16. Vorrichtung nach einem der Ansprüche 1 bis 15, **dadurch gekennzeichnet, dass** das Kreismesser (14) topfartig ausgebildet ist.

17. Vorrichtung nach einem der Ansprüche 1 bis 16, **dadurch gekennzeichnet, dass** die Schnittgegenlage (15) gegenüber dem Kreismesser (14) geneigt angeordnet ist, derart, dass sich die durch das Kreismesser (14) aufgespannte Ebene E₁ und die durch die Unterseite der Schnittgegenlage (15) aufgespannte Ebene E₂ mindestens in einem Punkt schneiden.

18. Vorrichtung nach Anspruch 17, **dadurch gekennzeichnet, dass** die Neigung zwischen Kreismesser (14) und Schnittgegenlage (15) einstellbar ist.

19. Vorrichtung nach einem der Ansprüche 1 bis 18, **dadurch gekennzeichnet, dass** dem Messerkopf (12) ein Antrieb (16) für das Kreismesser (14) zugeordnet ist.

20. Vorrichtung nach einem der Ansprüche 1 bis 19, **dadurch gekennzeichnet, dass** dem Transportelement (11) eine Vorrichtung zur Erzeugung eines Unterdrucks zugeordnet ist, derart, dass die Produkte mindestens während des Schneidvorgangs auf dem Transportelement (11) fixiert sind.

21. Vorrichtung nach einem der Ansprüche 1 bis 20, **dadurch gekennzeichnet, dass** dem Messerkopf (12) eine Einrichtung (17) zur Entfernung der vom Produkt getrennten Teile zugeordnet ist.

22. Vorrichtung nach Anspruch 21, **dadurch gekennzeichnet, dass** dem Messerkopf (12) eine Absaugeinrichtung zugeordnet ist.

23. Vorrichtung zum Verarbeiten von Fleisch, umfassend ein Transportelement, ein Element zur Lageerkennung, mindestens ein Trennmittel (51), eine Regel- und/oder Steuerungsvorrichtung, die mit dem Element zur Lageerkennung und dem oder jedem Trennmittel (51) in Wirkverbindung steht, sowie eine Vorrichtung (10) zum Oberflächentrimmen, die ebenfalls mit der Regel- und/oder Steuerungsvorrichtung in Wirkverbindung steht, **dadurch gekennzeichnet, dass** die Vorrichtung (10) zum Oberflächentrinvnen nach einem der Ansprüche 1 bis 22 ausgebildet ist.

24. Vorrichtung nach Anspruch 23, **dadurch gekennzeichnet, dass** das Element zur Lageerkennung der Vorrichtung zum Verarbeiten von Fleisch identisch mit dem Element (13) zur Lageerkennung der Vorrichtung (10) zum Oberflächentrimmen ist.

25. Vorrichtung nach Anspruch 23 oder 24, **dadurch gekennzeichnet, dass** die Regel- und/oder Steuerungsvorrichtung der Vorrichtung (50) zum Verarbeiten von Fleisch identisch mit der Steuerung (19) der Vorrichtung (10) zum Oberflächentrimmen ist.

26. Verfahren zum Oberflächentrimmen von Fleisch, insbesondere von Fischfilets, umfassend die Schritte:
- Erkennen der Lage der zu bearbeitenden Produkte mit einem Element (13) zur Lageerkennung,
- Ermitteln geometrischer Daten und/oder Bilddaten jedes Produktes,
- Zuführen der Produkte in den Bereich eines Messerkopfes (12) mit einem Transportelement (11),
- Trimmen der Produkte durch Schneiden eines Fleischstreifens von den Produkten auf der Basis der zuvor ermittelten Daten mit dem Messerkopf (12), und
- Abführen der Produkte aus dem Bereich des Messerkopfes (12) mit dem Transportelement (11),
**dadurch gekennzeichnet, dass** das Trimmen durch ein Kreismesser (14) ausgeführt wird, wobei der das Kreismesser (14) und eine Schnittgegenlage (15) aufweisende Messerkopf (12) zum Trimmen der Produkte im Raum automatisch frei und der Kontur des Produktes folgend bewegt wird.

27. Verfahren nach Anspruch 26, **dadurch gekennzeichnet, dass** der Messerkopf (12) zum Produkt bewegt wird.

28. Verfahren nach Anspruch 26 oder 27, **dadurch gekennzeichnet, dass** der Messerkopf (12) bzw. dessen Bewegungen wahlweise durch die Produkte selbst und/oder aktiv gesteuert werden.

29. Verfahren nach einem der Ansprüche 26 bis 28, **dadurch gekennzeichnet, dass** der Messerkopf (12) um und/oder entlang drei Achsen (A, B, D) bewegt wird.

30. Verfahren nach einem der Ansprüche 26 bis 29, **dadurch gekennzeichnet, dass** der Messerkopf um und/oder entlang vier Achsen (A, B, C, D) bewegt wird.

31. Verfahren nach einem der Ansprüche 26 bis 30, **dadurch gekennzeichnet, dass** der Messerkopf (12) lineare und bogenförmige Bewegungen sowie Kippbewegungen ausführt.

32. Verfahren nach Anspruch 31, **dadurch gekennzeichnet, dass** der Schnittdruck durch die Kippbewegung eingestellt wird.

33. Verfahren nach einem der Ansprüche 26 bis 32, **dadurch gekennzeichnet, dass** die Produkte mindestens während des Schneidens auf dem Transportelement (11) fixiert werden.

34. Verfahren nach einem der Ansprüche 26 bis 33, **dadurch gekennzeichnet, dass** die Schnitttiefe bzw. die Schnittdicke durch Verändern der Neigung zwischen dem Kreismesser (14) und der Schnittgegenlage (15) eingestellt wird.

35. Verfahren nach einem der Ansprüche 26 bis 34, **dadurch gekennzeichnet, dass** die vom Produkt abgetrennten Teile unmittelbar entfernt werden.

36. Verfahren nach Anspruch 35, **dadurch gekennzeichnet, dass** die Teile abgesaugt werden.

## Claims

1. Apparatus for trimming the surface of meat, in particular fish fillets, comprising a transport element (11) for the continuous conveying of products to be processed in the transport direction T into the region of a knife head (12), an element (13) for recognising the position of the products, a knife head (12) for trimming the products, and a control system for moving the knife head (12) depending on the data and information determined by the element (13) for position recognition, **characterised in that** the knife head (12) comprises a circular blade (14) and a cutting counter-surface (15) and is constructed for the automatic execution of free trimming cuts following the individual contour of the products.

2. Apparatus according to claim 1, **characterised in that** the knife head (12) is constructed to be movable about and/or along at least three axes (A, B, D).

3. Apparatus according to claim 1 or 2, **characterised in that** the knife head (12) is constructed to be movable about and/or along four axes (A, B, C, D).

4. Apparatus according to any of claims 1 to 3, **characterised in that** the knife head (12) is optionally product-controlled and/or actively controlled.

5. Apparatus according to any of claims 1 to 4, **characterised in that** the knife head (12) is arranged via a flange element (28) on a lever element (21) that is movable pivotably up and down about a horizontally extending axis B.

6. Apparatus according to claim 5, **characterised in that** the lever element (21) is arranged on a rocker (23) which for its part is rotatable about a vertical axis A.

7. Apparatus according to claim 6, **characterised in that** the lever element (21) is additionally connected via a compensating element (24) to the rocker (23).

8. Apparatus according to claim 7, **characterised in that** the compensating element (24) is optionally a hydraulic or pneumatic cylinder, a spring, a counterweight or the like.

9. Apparatus according to any of claims 1 to 8, **characterised in that** the knife head (12) is constructed to be tiltable about an axis D transverse to the transport direction T.

10. Apparatus according to any of claims 5 to 9, **characterised in that** the knife head (12) is pivotable relative to the lever element (21) about a horizontally extending axis C.

11. Apparatus according to claim 9 or 10, **characterised in that** the pivot movement about the axis B and the tilting movement about the axis D is optionally executable under product control and/or under drive control.

12. Apparatus according to any of claims 9 to 11, **characterised in that** the cutting pressure is adjustable about the axis D by means of spring elements (25, 26) or the like.

13. Apparatus according to any of claims 9 to 12, **characterised in that** for executing the tilting movement about the axis D the knife head (12) is associated with a pneumatic cylinder (27) or the like.

14. Apparatus according to claim 13, **characterised in that** the cutting counter-surface (15) is of ring-shaped construction.

15. Apparatus according to any one of claims 1 to 14, **characterised in that** at least in a region located ahead of the circular blade (14) in the transport direction T of the products to be processed the cutting counter-surface (15) is constructed as a detection element (20) for recognising the contour of the products.

16. Apparatus according to any of claims 1 to 15, **characterised in that** the circular blade (14) is of pot-like construction.

17. Apparatus according to any of claims 1 to 16, **characterised in that** the cutting counter-surface (15) is arranged inclined with respect to the circular blade (14) in such a way the plane E₁ spanned by the circular blade (14) and the plane E₂ spanned by the underside of the cutting counter-surface (15) intersect at least at one point.

18. Apparatus according to claim 17, **characterised in that** the inclination between the circular blade (14) and the cutting counter-surface (15) is adjustable.

19. Apparatus according to any of claims 1 to 18, **characterised in that** the knife head (12) is associated with a drive (16) for the circular blade (14).

20. Apparatus according to any of claims 1 to 19, **characterised in that** the transport element (11) is associated with a device for producing a low-pressure in such a way that the products are fixed on the transport element (11) at least during the cutting operation.

21. Apparatus according to any of claims 1 to 20, **characterised in that** the knife head (12) is associated with a device (17) for removing the parts separated from the product.

22. Apparatus according to claim 21, **characterised in that** the knife head (12) is associated with a suction device.

23. Apparatus for processing meat comprising a transport element, an element for position recognition, at least one dividing means (51), a regulating and/or controlling device functionally connected to the element for position recognition and to the or each dividing means (51), as well as an apparatus (10) for surface trimming which is likewise actively connected to the regulating and/or controlling apparatus, **characterised in that** the apparatus (10) is constructed for surface trimming according to any of claims 1 to 22.

24. Apparatus according to claim 23, **characterised in that** the element for position recognition in the apparatus for processing meat is identical to the element (13) for position recognition in the apparatus (10) for surface trimming.

25. Apparatus according to claim 23 or 24, **characterised in that** the regulating and/or controlling apparatus in the apparatus (50) for processing meat is identical to the control system (19) in the apparatus (10) for surface trimming.

26. Method for trimming the surface of meat, in particular fish fillets, comprising the steps:
- recognising the position of the products to be processed by means of an element (13) for position recognition;
- determining geometric data and/or image data for each product;
- feeding the products into the region of a knife head (12) by means of a transport element (11);
- trimming the products by cutting a strip of meat from the products on the basis of the previously determined data using the knife head (12); and
- carrying the products away out of the region of the knife head (12) by means of the transport element (11),
**characterised in that** the trimming is performed by a circular blade (14), wherein the knife head (12), comprising the circular blade (14) and a cutting counter-surface (15), for trimming the products is moved automatically freely in space and following the contour of the product.

27. Method according to claim 26, **characterised in that** the knife head (12) is moved to the product.

28. Method according to any of claims 26 to 27, **characterised in that** the knife head (12) or its movements are optionally controlled by the products themselves and/or actively.

29. Method according to any of claims 26to 28, **characterised in that** the knife head (12) is moved about and/or along three axes (A, B, D).

30. Method according to any of claims 26 to 29, **characterised in that** the knife head is moved about and/or along four axes (A, B, C, D).

31. Method according to any of claims 26to 30, **characterised in that** the knife head (12) executes linear and arc-shaped movements as well as tilting movements.

32. Method according to claim 31, **characterised in that** the cutting pressure is set by the tilting movement.

33. Method according to any of claims 26 to 32, **characterised in that** the products are fixed on the transport element (11) at least during cutting.

34. Method according to any of claims 26 to 33, **characterised in that** the cutting depth or the cutting thickness is set by altering the inclination between the circular blade (14) and the cutting counter-surface (15).

35. Method according to any of claims 26 to 34, **characterised in that** the parts separated from the products are removed immediately.

36. Method according to claim 35, **characterised in that** the parts are removed by suction.

## Revendications

1. Dispositif destiné à rogner la surface de chair, notamment de filets de poissons, ledit dispositif comportant un élément de transport (11) destiné à transporter en continue les produits à traiter dans la direction de transport T jusque dans la région d'une tête de couteau (12), un élément (13) de détection de position des produits, une tête de couteau (12) destinée à traiter les produits ainsi qu'une commande destinée à déplacer la tête de couteau (12) en fonction des données et informations déterminées par l'élément (13) de détection de position, **caractérisé en ce que** la tête de couteau (12) comporte un couteau circulaire (14) et une butée de coupe (15) et est conformé pour réaliser de façon automatique des coupes par rognage libres qui suit le contour individuel des produits.

2. Dispositif selon la revendication 1, **caractérisé en ce que** la tête de couteau (12) est conformée de façon à pouvoir se déplacer autour et/ou le long d'au moins trois axes (A, B, D).

3. Dispositif selon la revendication 1 ou 2, **caractérisé en ce que** la tête de couteau (12) est conformée de façon à pouvoir se déplacer autour et/ou le long de quatre axes (A, B, C, D).

4. Dispositif selon l'une des revendications 1 à 3, **caractérisé en ce que** la tête de couteau (12) est commandée au choix de façon active et/ou commandée par le produit.

5. Dispositif selon l'une des revendications 1 à 4, **caractérisé en ce que** la tête de couteau (12) est disposée au-dessus d'un élément formant bride (28) au niveau d'un élément de levier (21) qui est apte à se déplacer verticalement suivant un mouvement de va-et-vient tout en étant apte à pivoter autour d'un axe B s'étendant horizontalement.

6. Dispositif selon la revendication 5, **caractérisé en ce que** l'élément de levier (21) est disposé au niveau d'une bielle oscillante (23) qui est apte à tourner de son côté autour d'un axe vertical A.

7. Dispositif selon la revendication 6, **caractérisé en ce que** l'élément de levier (21) est en liaison avec la bielle oscillante (23) en plus par le biais d'un élément de compensation (24).

8. Dispositif selon la revendication 7, **caractérisé en ce que** l'élément de compensation (24) est au choix un vérin hydraulique ou pneumatique, un ressort, un contrepoids ou analogue.

9. Dispositif selon l'une des revendications 1 à 8, **caractérisé en ce que** la tête de couteau (12) est conformée de façon à pouvoir basculer autour d'un axe D transversalement à la direction de transport T.

10. Dispositif selon l'une des revendications 5 à 9, **caractérisé en ce que** la tête de couteau (12) est apte à pivoter par rapport à l'élément de levier (21) autour d'un axe s'étendant horizontalement.

11. Dispositif selon la revendication 9 ou 10, **caractérisé en ce que** le mouvement de pivotement autour de l'axe B et le mouvement de basculement autour de l'axe D peuvent être réalisés au choix en étant commandé par un entraînement et/ou en étant commandé par le produit.

12. Dispositif selon l'une des revendications 9 à 11, **caractérisé en ce que** la pression de coupe autour de l'axe D peut être réglée au moyen d'éléments de ressort (25, 26) ou analogues.

13. Dispositif selon l'une des revendications 9 à 12, **caractérisé en ce qu'**un vérin pneumatique (27) ou analogue est associé à la tête de couteau (12) pour réaliser le mouvement de basculement autour de l'axe D.

14. Dispositif selon l'une des revendications 1 à 13, **caractérisé en ce que** la butée de coupe (15) a une conformation annulaire.

15. Dispositif selon l'une des revendications 1 à 14, **caractérisé en ce que** la butée de coupe (15) est conformée, au moins dans une région qui se trouve en avant du couteau circulaire (14) par référence à la direction de transport T des produits à traiter, en élément palpeur (20) destiné à détecter le contour des produits.

16. Dispositif selon l'une des revendications 1 à 15, **caractérisé en ce que** le couteau circulaire (14) est conformé en cuvette.

17. Dispositif selon l'une des revendications 1 à 16, **caractérisé en ce que** la butée de coupe (15) est disposé de façon inclinée par rapport au couteau circulaire (14) de sorte que le plan E₁ passant par le couteau circulaire (14) et le plan E₂ passant par le côté inférieur de la butée de coupe (15) se coupent au moins en un point.

18. Dispositif selon la revendication 17, **caractérisé en ce que** l'inclinaison entre le couteau circulaire (14) et la butée de coupe (15) est réglable.

19. Dispositif selon l'une des revendications 1 à 18, **caractérisé en ce qu'**un entraînement (16) destiné au couteau circulaire (14) est associé à la tête de couteau (12).

20. Dispositif selon l'une des revendications 1 à 19, **caractérisé en ce qu'**un dispositif destiné à générer une dépression est associé à l'élément de transport (11) de sorte que les produits sont fixés sur l'élément de transport (11) au moins pendant le processus de coupe.

21. Dispositif selon l'une des revendications 1 à 20, **caractérisé en ce qu'**un dispositif (17) destiné à enlever des parties séparées du produit est associé à la tête de couteau (12).

22. Dispositif selon la revendication 21, **caractérisé en ce qu'**un dispositif d'aspiration est associé à la tête de couteau (12).

23. Dispositif de traitement de chair, ledit dispositif comportant un élément de transport, un élément de détection de position, au moins un moyen de séparation (51), un dispositif de régulation et/ou de commande qui en est en liaison active avec l'élément de détection de position et le ou chaque moyen de séparation (51), ainsi qu'un dispositif (10) de rognage de surface qui est en liaison active également avec le dispositif de régulation et/ou de commande, **caractérisé en ce que** le dispositif (10) de rognage de surface est conformé selon l'une des revendications 1 à 22.

24. Dispositif selon la revendication 23, **caractérisé en ce que** l'élément de détection de position du dispositif de traitement de chair est identique à l'élément (13) de détection de position du dispositif (10) de rognage de surface.

25. Dispositif selon la revendication 23 ou 24, **caractérisé en ce que** le dispositif de régulation et/ou de commande du dispositif (50) de traitement de chair est identique à la commande (19) du dispositif (10) de rognage de chair.

26. Procédé de rognage de surface de chair, notamment de filets de poisson, ledit procédé comportant les étapes consistant à :
- détecter la position des produits à traiter au moyen d'un élément (13) de détection de position,
- déterminer des données géométriques et/ou des données d'image de chaque produit,
- amener les produits jusque dans la région d'une tête de couteau (12) au moyen d'un élément de transport (11),
- rogner les produits en coupant une bande de chair des produits au moyen de la tête de couteau (12) en se fondant sur les données préalablement déterminées, et
- enlever les produits de la région de la tête de couteau (12) au moyen de l'élément de transport (11),
**caractérisé en ce que** le rognage est effectué au moyen d'un couteau circulaire (14), la tête de couteau (12) comportant le couteau circulaire (14) et une butée de coupe (15) étant déplacée librement dans l'espace de façon automatique et en suivant le contour du produit afin de rogner les produits.

27. Procédé selon la revendication 26, **caractérisé en ce que** la tête de couteau (12) est déplacée par rapport au produit.

28. Procédé selon la revendication 26 ou 27, **caractérisé en ce que** la tête de couteau (12) ou ses déplacements sont commandés au choix de façon active et/ou par les produits eux-mêmes.

29. Procédé selon l'une des revendications 26 à 28, **caractérisé en ce que** la tête de couteau (12) est déplacée autour et/ou le long de trois axes (A, B, D).

30. Procédé selon l'une des revendications 26 à 29, **caractérisé en ce que** la tête de couteau est déplacée autour et/ou le long de quatre axes (A, B, C, D).

31. Procédé selon l'une des revendications 26 à 30, **caractérisé en ce que** la tête de couteau (12) effectue des mouvements linéaires ou incurvés ainsi que des mouvements de basculement.

32. Procédé selon la revendication 31, **caractérisé en ce que** la pression de coupe est réglée par le mouvement de basculement.

33. Procédé selon l'une des revendications 26 à 32, **caractérisé en ce que** les produits sont fixés sur l'élément de transport (11) au moins pendant la coupe.

34. Procédé selon l'une des revendications 26 à 33, **caractérisé en ce que** la profondeur de coupe ou l'épaisseur de coupe est réglée en codifiant l'inclinaison entre le couteau circulaire (14) et la butée de coupe (15).

35. Procédé selon l'une des revendications 26 à 34, **caractérisé en ce que** les parties séparées du produit sont immédiatement enlevées.

36. Procédé selon la revendication 35, **caractérisé en ce que** les parties sont enlevées par aspiration.
